**Europäisches Patentamt**

**European Patent Office**

**Office européen des brevets**

(19)

(11) Publication number : **0 494 721 A1**

(12) # EUROPEAN PATENT APPLICATION

(21) Application number : **92200057.5**

(22) Date of filing : **10.01.92**

(51) Int. Cl.⁵ : **A22C 29/00, A22C 29/04, A01K 63/02**

(30) Priority : **11.01.91 NL 9100047**

(43) Date of publication of application :
**15.07.92 Bulletin 92/29**

(84) Designated Contracting States :
**AT BE CH DE DK ES FR GB GR IT LI LU MC NL PT SE**

(71) Applicant : **B.V. HANDELMAATSCHAPPIJ BLUE RIBBON**
**16, Jan van der Heijdenstraat**
**NL-3261 LE Oud-Beijerland (NL)**

(72) Inventor : **Bolt, Peter Bram**
**49a, Meirstraat**
**NL-4751 AC Oud Gastel (NL)**

(74) Representative : **Mommaerts, Johan Hendrik, Dipl.-Phys. et al**
**Exterpatent B.V. Postbus 90649**
**NL-2509 LP Den Haag (NL)**

(54) **Method for making oysters or similar shellfish suitable for dry transportation, a strap suitable for the purpose, and anoyster or similar shellfish provided with such a strap.**

(57)    The invention relates to a method for making oysters or similar shellfish suitable for dry transportation, in which each oyster is provided with a tensioning means in the form of a strap (2) gripping around the two shell halves (1,5), the clamping force being at least greater than the opening force of the oyster, in order in this way to hold the oyster closed. The invention also relates to a strap (2) intended for use with the method according to the invention and to an oyster or similar shellfish which is closed by means of such a strap.

Fig.1.

EP 0 494 721 A1

The present invention relates in the first place to a method for making oysters or similar shellfish suitable for dry transportation, in which each oyster is provided with tensioning means gripping around the two shell halves, the clamping force being at least greater than the opening force of the oyster, in order in this way to hold the oyster closed.

Oysters farmed in Northern countries are resistant to low temperatures and can also be transported in a relatively cold state, in which case the metabolism is so slow that the shell remains closed. This is important, otherwise during dry transportation the water present in the shell will run out of the shell, with the result that the oyster dries out and possibly dies, and/or infection of the oyster can take place. In the closed state of the oyster the water present in it is sufficient to keep it alive, and infection is prevented.

Since Northern oyster farms have increasingly been affected by virus infections in recent years, and are therefore threatened with extinction, there are increasing imports of oysters from warmer countries. These oysters are kept alive in suitable conditions in running water. During the usual transportation in crates or the like to the customers, the oysters are, however, found to open already, with the result that the water runs out of the shell and the oysters become unfit for consumption due to drying out, deterioration and/or infection.

Transportation in water tanks is in fact possible, but it is, of course, very difficult because of the great weight, while the risk remains that the oysters will open on removal from the tanks.

Despite the great need for it, no suitable solution to this problem has been found so far. Although JP-A-1,291,740 describes the use of a vacuum-sealed bag containing several shellfish, this method of sealing up the shellfish has a number of major disadvantages. In the first place, it has been found that during vacuum suction of a bag with shellfish the shells first open slightly and water runs out of the shells while, as already stated, the actual intention is to keep the shells closed, so that, inter alia, running dry is prevented during transportation. The vacuum also disappears as soon as there is very slight damage to the bag, with the result that a considerable number of shellfish become unfit for consumption. Besides, it is not possible in a restaurant or the like to select from a bag with, for example, oysters just one oyster, since opening the bag means that all other oysters in the bag then have to be consumed within a short time. Finally, there is another very considerable aesthetic disadvantage. Shellfish such as oysters and the like are generally eaten on exclusive occasions, and it is therefore undesirable to serve them in a bag.

The invention provides a solution to the above-mentioned disadvantages, and to that end is characterised in that the clamping device comprises a strap which is placed around the oyster.

Keeping the oysters closed by means of a strap is found not only to provide a more effective protection against water loss and infection of oysters transported dry, but the oysters can also be kept closed until just before use and possibly even until after serving. Such protection also serves as a guarantee of freshness and quality, since in the case of a dead oyster the shell will spring open on removal of the strap, while this takes place much more slowly in the case of a fresh oyster.

This provides a simple possibility for the removal of oysters which may be unfit for consumption, and for instance compensation can then be received for these under the guarantee provisions.

A strap is understood to mean many kinds of straps, including straps of which the ends can be connected together after placing round the oyster or the like. Also suitable are endless straps of elastomeric material which if necessary can be stretched (by machine or by hand) and then placed around the oyster. A good clamping action can be obtained through a suitable selection of the material and the dimensions of the strap. In particular, an elastic band with a diameter of 20 mm, a thickness of 1.5 mm and a width of 8 mm is found to be very satisfactory.

Further details of the invention are given in subclaims 2 - 4.

Placing of the strap around the oysters and if necessary connecting the ends thereof can be carried out simply and rapidly by mechanical means if it is of a suitable type.

It will be clear that the method of transport described above can also be used if the oysters are placed in a suitable water tank again at the customer, for which purpose the strap must then be removed beforehand.

The invention also relates to a strap intended for use with the method according to the invention.

Finally, the invention relates to an oyster or similar shellfish which is closed with the aid of a strap according to the invention.

The invention will be explained in greater detail below with reference to the appended drawing, in which:

Fig. 1 shows a top view of an oyster which is held in the closed position by means of a self-closing cable binder;

Fig. 2 shows a cross-section of the oyster of Fig. 1;

Fig. 3 shows a cross-section of an oyster which is held in the closed position by means of an endless strap of elastomeric material.

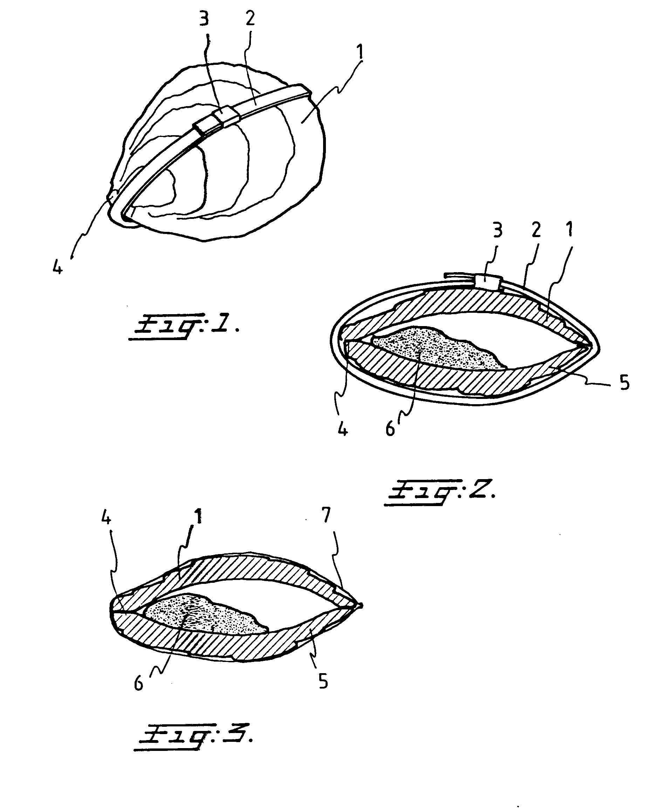

Fig. 1 shows a top view of an oyster of which a top shell half 1 is visible. A strap 2 is fitted around the oyster. The ends of the strap 2 are connected to each other at 3 by means of a tension connection suitable for the purpose. This tension connection can be provided by, for example, turning the ends into each other in the case of a shape-retaining material, by cold welding after tensioning, or by means of a tension lock in the case of a self-closing cable binder. In this figure only one strap is shown, but it goes without saying that several straps can also be fitted around the shell halves. The hinge point of the two shell halves is indicated by 4. The strap 2 is preferably tensioned in the direction of the longest axis of the oyster, starting from the hinge point 4. Where several straps are used, they are advantageously fitted crossed. It goes without saying that a strap provided with a layer of adhesive on one side can also be used.

Fig. 2 shows a cross-section of Fig. 1, the lower shell half being indicated by 5, and the oyster by 6. The other parts are indicated by the same reference numbers.

Fig. 3 shows an oyster which is held in the closed position by means of a ring 7 of elastomeric material. Said ring 7 can be, for example, a ring of broad elastic band.

It is particularly advantageous to make the strap such that after fastening of the strap around it the oyster can be opened only by damaging the strap or the oyster itself. This means that the strap can fulfil a guarantee function.

Finally, the strap can, of course, be provided with markings, which can include, inter alia information concerning freshness, weight and supplier.

**Claims**

1. Method for making oysters or similar shellfish suitable for dry transportation, in which each oyster is provided with a tensioning means gripping around the two shell halves, the clamping force being at least greater than the opening force of the oyster, in order in this way to hold the oyster closed, **characterised in that** the tensioning means comprises a strap (2) which is placed around the oyster.

2. Method according to claim 1, **characterised in that** the strap (2) is made in the form of a self-closing cable binder.

3. Method according to one or more of the preceding claims, **characterised in that** at least two straps (2) are fitted crosswise.

4. Method according to one or more of the preceding claims 1 - 3, **characterised in that** the strap is made in such a way that the oyster cannot be opened without damage to it.

5. Strap intended for use in the method according to one or more of the preceding claims.

6. Oyster or similar shellfish which is closed by means of a strap according to claim 5.

_Fig:1._

_Fig:2._

_Fig:3._

EP 0 494 721 A1

# EUROPEAN SEARCH REPORT

**European Patent Office**

Application Number

EP 92 20 0057

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | PATENT ABSTRACTS OF JAPAN<br>vol. 14, no. 74 (C-687)(4017) 13 February 1990<br>& JP-A-1 291 740 ( RYOJI SASAKI ) 24 November 1989<br>* the whole document *<br>--- | 1,5,6 | A22C29/00<br>A22C29/04<br>A01K63/02 |
| A | DE-C-186 835 (JENSEN)<br>* the whole document *<br>--- | 1 | |
| A | US-A-3 656 458 (MARCUS)<br>* column 2, line 13 - line 31 *<br>* column 2, line 74 - column 3, line 5 *<br>--- | 1 | |
| A | US-A-2 092 711 (E.W.ASHTON)<br>* the whole document *<br>--- | 1 | |
| A | US-A-2 635 283 (T.M.PRUDDEN)<br>--- | | |
| A | EP-A-0 398 667 (LETT)<br>--- | | |
| A | CA-A-978 036 (DICKIE)<br>--- | | TECHNICAL FIELDS SEARCHED (Int. Cl.5 ) |
| A | GB-A-448 996 (BARWOOD)<br>--- | | A22C<br>A01K<br>B65D |
| A | FR-A-2 599 936 (QUERIC)<br>--- | | |
| P,X | DE-U-9 100 919 (BLUE RIBBON)<br>* page 5, last paragraph - page 6, last paragraph *<br>* page 8, paragraph 2; claims 1-4 *<br>----- | 1-6 | |

The present search report has been drawn up for all claims

| Place of search | Date of completion of the search | Examiner |
|---|---|---|
| THE HAGUE | 24 MARCH 1992 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5